# EUROPÄISCHE PATENTSCHRIFT

(11) **EP 4 275 102 B1**
(45) Veröffentlichungstag und Bekanntmachung des Hinweises auf die Patenterteilung: **04.12.2024**
(21) Anmeldenummer: 21794754.8
(22) Anmeldetag: 13.10.2021
(51) Int. Cl.: G05D 16/06

(54) **GASDRUCKREGLER**
GAS PRESSURE REGULATOR
RÉGULATEUR DE PRESSION DE GAZ

(30) Priorität: 11.01.2021 DE 102021000069
(43) Veröffentlichungstag der Anmeldung: 15.11.2023
(73) Patentinhaber: Truma Gerätetechnik GmbH & Co. KG, 85640 Putzbrunn (DE)
(72) Erfinder: ARMESTO-BEYER, Kai, 85640 Putzbrunn (DE)
(74) Vertreter: Prinz & Partner mbB
(86) Internationale Anmeldenummer: PCT/EP2021/000123
(87) Internationale Veröffentlichungsnummer: WO 2022/148521

(56) Entgegenhaltungen:
- US-A- 3 599 658
- US-A1- 2012 111 425

## Beschreibung

Die vorliegende Erfindung betrifft einen Gasdruckregler.

Gasdruckregler sind beispielweise beschrieben in der DE 10 2019 103 201 A1 oder der WO 2020/030398 A1. Die Regler reduzieren den Gasdruck, der von einer Gasquelle stammt, auf einen Gasdruck für die nachgeordneten Verbraucher. Manche Regler verfügen über ein Überdruckventil, das in dem Fall eines zu hohen Drucks das Gas in die Umwelt ableitet. Dieser Überdruck liegt oberhalb des normal üblichen anliegenden Drucks. Regler mit Überdruckventilen beschreiben beispielsweise die US 2012/111425 A1, die DE 551 843 A oder die GB 582,051 A. Für bestimmte Anwendungsfälle, z. B. für den Campingbereich, ist es vorgesehen, dass Dichtigkeitsprüfungen an den Gasdruckreglern und dem nachgeordneten Niederdrucksystem durchgeführt werden müssen. Der dabei anliegende Druck liegt jedoch zumeist oberhalb des Drucks, bei dem das Überdruckventil reagiert.

Daher besteht die der Erfindung zugrundeliegende Aufgabe darin, einen Gasdruckregler vorzuschlagen, der über eine Art von Überdruckventil verfügt und der gleichzeitig einen Überdrucktest ermöglicht.

Die Erfindung löst die Aufgabe durch einen Gasdruckregler mit einem Einlass, einem Auslass, einem Gehäuse, einer Membran, einem Steuerelement, einer Steuerkammer und einer Ablasskammer, wobei der Einlass und der Auslass jeweils auf die Steuerkammer münden, wobei die Membran die Steuerkammer teilweise begrenzt, wobei die Membran und das Steuerelement derartig ausgestaltet und in dem Gehäuse derartig angeordnet sind, sodass die Membran und das Steuerelement relativ zueinander beweglich sind, wobei bei einer relativen Ablass-Anordnung von Membran und Steuerelement eine Passage zwischen der Steuerkammer und der Ablasskammer geöffnet ist, und wobei ein verstellbares Vorspannelement vorhanden ist, welches eine relative Bewegung zwischen der Membran und dem Steuerelement behindert.

Der erfindungsgemäße Gasdruckregler verfügt über einen Einlass und einen Auslass, die jeweils auf eine Steuerkammer münden. In dieser Steuerkammer wird die Reduktion des anliegenden Gasdrucks auf den gewünschten Gasdruck vorgenommen. Für die Druckregelung ist die Membran vorhanden, die die Steuerkammer teilweise begrenzt, also einen Teil der Umwandung der Steuerkammer bildet. Die Membran ist dabei in dem Gehäuse des Gasdruckreglers beweglich angeordnet. Diese Beweglichkeit dient im normalen Betrieb der Druckregelung, indem das Volumen der Steuerkammer geändert wird. Bei einer relativen Position zwischen Membran und Steuerelement (also der Ablass-Anordnung) ist eine Passage zwischen der Steuerkammer und einer Ablasskammer geöffnet. Strömt im normalen Zustand das Gas nur innerhalb der Steuerkammer, so ergibt sich also ein Übergang zu einer Ablasskammer. Die Ablasskammer ist dabei vorzugsweise mit der Außenwelt um den Gasdruckregler herum verbunden. Somit ist durch die Passage und die Ablasskammer die Funktion eines Überdruckventils gegeben. Das Steuerelement ist in einer Ausgestaltung als eine Art von Stempel ausgeführt, wobei in einer Ausgestaltung eine Stirnseite unterhalb der Membran in der Steuerkammer angeordnet ist, sodass die Membran quasi auf dieser Stirnseite aufliegt. Ergänzend ist ein Vorspannelement vorhanden. Das Vorspannelement selbst ist beweglich ausgestaltet und angeordnet. Dies dient dem Zweck, dass es aus einer Position in eine andere bewegt werden kann. Insofern das Vorspannelement den Zweck hat, nur für eine Dichtigkeitsprüfung das Überdruckventil zu blockieren, ist es erforderlich, dass das Vorspannelement nur temporär und insbesondere nur während des Tests aktiv ist. Daher ist die Beweglichkeit vorgesehen, sodass das Vorspannelement wieder fortbewegt werden kann. Dafür sind in einer Ausgestaltung zwei feste Positionen vorgesehen, welche das Vorspannelement einnehmen und zwischen denen es - z. B. durch die Einwirkung eines Nutzers - bewegt werden kann. Das Vorspannelement dient dazu, die relative Bewegung zwischen Membran und Steuerelement zu behindern. Dadurch soll das Öffnen der Passage zwischen Membran und Steuerelement verhindert werden. Damit wird das Überdruckventil blockiert und der Drucktest kann durchgeführt werden. Umgekehrt kann nach dem Drucktest für den Normalbetrieb das Überdruckventil wieder aktiviert werden.

Eine Ausgestaltung sieht vor, dass das Vorspannelement verhindert, dass die Ablass-Anordnung erreicht wird. Das Vorspannelement sorgt in dieser Ausgestaltung dafür, dass die relative Ablass-Anordnung zwischen Membran und Steuerelement nicht erreicht werden kann, sodass die Passage nicht geöffnet ist.

Eine Ausgestaltung beinhaltet, dass der Gasdruckregler weiterhin eine Federkomponente aufweist, dass die relative Bewegung zwischen Membran und Steuerelement gegen eine Federkraft der Federkomponente erfolgt, und dass das Vorspannelement auf die Federkraft einwirkt. In dieser Ausgestaltung bewirkt eine Federkomponente, dass die Passage zwischen Membran und Steuerelement geschlossen bleibt. Ein Öffnen der Passage ist daher nur möglich, wenn eine Kraft aufgewendet wird, die größer als die Federkraft ist.

Eine Ausgestaltung sieht vor, dass das Vorspannelement relativ zum Steuerelement bewegbar ausgestaltet und angeordnet ist, und dass eine Verschlusskraft der Federkomponente abhängig von einer Position des Vorspannelements relativ zum Steuerelement ist. Die Verschlusskraft ist dabei die Kraft, mit welcher die Federkomponente die Passage verschließt. In dieser Ausgestaltung kann das Vorspannelement relativ zum Steuerelement bewegt werden. Dies erfolgt in einer Ausgestaltung axial entlang einer Längsachse des Steuerelements. In Abhängigkeit von der Position des Vorspannelements ergibt sich dabei jeweils eine andere Verschlusskraft.

In einer Ausgestaltung ist das Vorspannelement beweglich auf dem Steuerelement aufgesteckt und wird durch die Federkomponente (eine alternative Bezeichnung ist: PRV-Feder für Pressure Relief Valve) gegen einen festen Lagerpunkt am Ende des Steuerelements gedrückt. Das Vorspannelement hat entlang des Steuerelements mindestens zwei Lagerebenen auf unterschiedlichen Höhen. Durch eine Rotation kann das Vorspannelement aus einer Position in eine andere bewegt und daher entlang der Achse des Steuerelements verschoben werden. Insofern das Vorspannelement den Zweck hat, für eine Dichtigkeitsprüfung das Überdruckventil zu blockieren, ist es erforderlich, dass das Vorspannelement nur temporär und insbesondere nur während des Tests aktiv ist. Daher ist die Beweglichkeit vorgesehen, sodass das Bewegungselement wieder fortbewegt werden kann. Das Vorspannelement dient dazu, die Schließkraft des Ablassventils zu erhöhen. Ist die Schließkraft erhöht, so ist damit vorzugsweise sichergestellt, dass die Passage zwischen Steuerkammer und Ablasskammer nicht geöffnet wird. Damit wird das Überdruckventil blockiert und der Drucktest kann durchgeführt werden.

Eine Ausgestaltung beinhaltet, dass eine Exzenterkomponente vorhanden ist, und dass die Exzenterkomponente eine axiale Bewegung des Vorspannelements entlang des Steuerelements bewirkt. Ein Exzenter ist eine bekannte Möglichkeit, um zwischen translatorischen und rotatorischen Bewegungen zu wandeln. Die Exzenterkomponente dient hier der axialen Verschiebung des Vorspannelements. Dies bewirkt in einer Ausgestaltung, dass die Federkomponente stärker oder schwächer kompensiert wird, wodurch sich die Einstellung der Verschlusskraft ändert.

In einer Ausgestaltung ist das Vorspannelement beweglich auf dem Steuerelement aufgesteckt und wird durch die Federkomponente gegen einen exzentrisch drehbaren Lagerpunkt am Ende des Steuerelements gedrückt. Durch die horizontale Rotation des Exzenters kann das Vorspannelement aus einer Position in eine andere bewegt und dadurch entlang der Achse des Steuerelements verschoben werden.

Eine Ausgestaltung beinhaltet, dass das Steuerelement durch die Membran hindurchragt, und dass sich die Passage zwischen dem Steuerelement und der Membran öffnet. In dieser Ausgestaltung befindet sich das Steuerelement in der Membran, wird also von der Membran - vorzugweise radial - umgeben. Zwischen Membran und Steuerelement befindet sich dabei die Passage.

In einer Ausgestaltung verfügen die Membran und das Steuerelement über Strukturen, die in einer relativen Anordnung sich so überlagern oder ergänzen, dass die Passage geschlossen ist. Wenn sich jedoch der Abstand zwischen Membran und Steuerelement ausreichend vergrößert, so greifen die Strukturen nicht mehr ineinander ein bzw. ergänzen sich nicht mehr und die Passage zwischen den beiden Komponenten wird geöffnet. Damit kann das Gas in die Ablasskammer strömen.

Eine Ausgestaltung beinhaltet, dass ein Hebel und ein Dichtelement beweglich in dem Gehäuse angeordnet sind, dass sich das Dichtelement zwischen dem Einlass und der Steuerkammer befindet, und dass der Hebel mit dem Steuerelement mechanisch kontaktiert ist. Diese Art von Gasdruckregler ist beispielsweise in den eingangs genannten Dokumenten DE 10 2019 103 201 A1 oder WO 2020/030398 A1 offenbart.

Im Einzelnen gibt es eine Vielzahl von Möglichkeiten, den Gasdruckregler auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen:
- Fig. 1: einen Schnitt durch eine Ausgestaltung eines Gasdruckreglers gemäß dem Stand der Technik,
- Fig. 2: einen Schnitt durch eine erste Ausgestaltung eines Gasdruckreglers gemäß der Erfindung mit einem inaktiven Vorspannelement in einer ersten Phase,
- Fig. 3: den Gasdruckregler der Fig. 2 mit einem aktiven Vorspannelement in einer zweiten Phase,
- Fig. 4: einen Teil eines Schnitts durch eine zweite Ausgestaltung eines Gasdruckreglers,
- Fig. 5: einen Schnitt durch eine dritte Ausgestaltung eines erfindungsgemäßen Gasdruckreglers mit einem inaktiven Vorspannelement in einer ersten Phase und
- Fig. 6: den Gasdruckregler der Fig. 5 mit einem aktiven Vorspannelement in einer zweiten Phase.

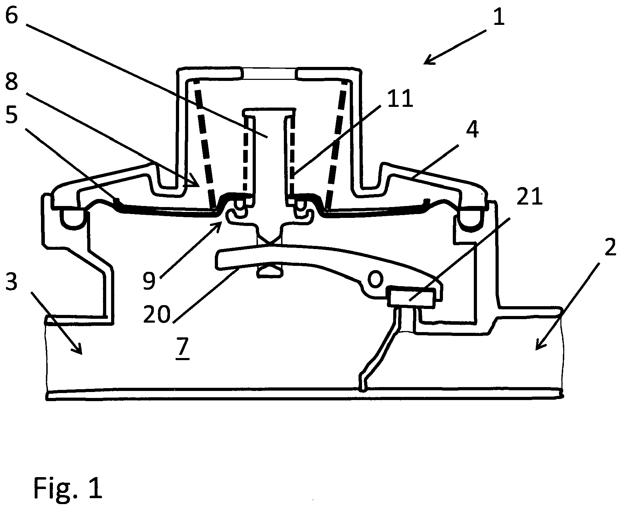

Die Fig. 1 zeigt einen Schnitt durch einen Gasdruckregler 1 gemäß dem Stand der Technik. Zwischen einem Einlass 2 und einem Auslass 3 für das Gas befindet sich innerhalb des Gehäuses 4 eine Steuerkammer 7, die auf der oberen Seite durch eine bewegliche Membran 5 begrenzt wird. Die Membran 5 umgibt dabei ein stempelförmiges Steuerelement 6, das mittig durch die Membran 5 hindurchragt. Der Druckregelung dienen dabei die Membran 5 und die Möglichkeit, durch sie das Volumen der Steuerkammer 7 zu verändern, sowie das Steuerelement 6, das mit einem Hebel 20 verbunden ist. Auf der Seite der Ablasskammer 8 ist die Membran 5 mit einer Feder belastet, die die Membran 5 in Richtung der Steuerkammer 7 drückt. Der Hebel 20 ist dabei drehbar in dem Gehäuse 4 gelagert und verschließt über ein Dichtelement 21 den Einlass 2 hinein in die Steuerkammer.

Für den - hier dargestellten - Fall, dass der anliegende Gasdruck zu groß wird, ist eine Art von Überdruckventil vorgesehen. Steigt der Druck an, so entfernt sich die Membran 5 fort von der Steuerkammer 7. Damit bildet sich eine Passage 9 zwischen der Membran 5 und dem Steuerelement 6 in ihrer Mitte. Durch diese Passage 9 oder allgemein Öffnung zwischen der mittleren Aussparung der Membran 5 und dem Steuerelement 6 kann das Gas aus der Steuerkammer 7 in die Ablasskammer 8 strömen. Die Ablasskammer 8 ist über eine hier am oberen Ende angeordneten Öffnung mit der Umwelt um den Gasdruckregler 1 verbunden. Dass sich die Passage 9 ab einem gewissen Druck in der Steuerkammer 7 öffnet, führt jedoch dazu, dass ein Drucktest mit einem Druck oberhalb des Werts, bei welchem das Überdruckventil reagiert, nicht möglich ist. Die Verschlusskraft, die zur Öffnung der Passage 9 aufzubringen ist, bedingt durch die Federkomponente 11, die sich einerseits auf dem Steuerelement 6 abstützt und andererseits auf der Membran 5 aufliegt.

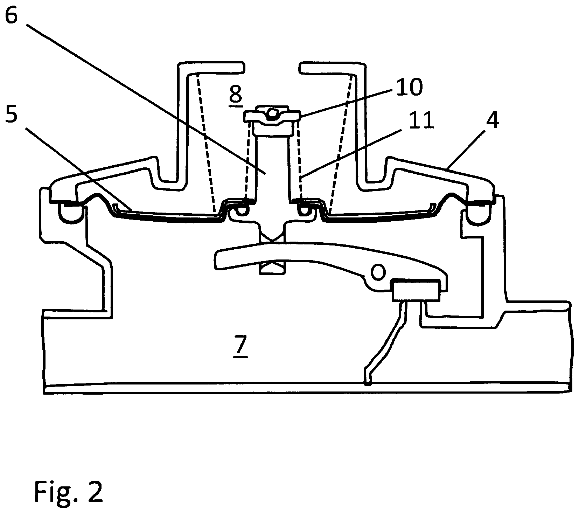

Die Fig. 2 zeigt eine erste Ausgestaltung des erfindungsgemäßen Gasdruckreglers 1, wobei gleiche Komponenten mit gleichen Bezugszeichen wie in der Fig. 1 bezeichnet sind. Um Wiederholungen zu vermeiden, werden daher hier nur die Unterschiede beschreiben.

Der wesentliche Unterschied besteht in dem variabel einsetzbaren Vorspannelement 10, welches sich hier in der Ablasskammer 8 oberhalb der Membran 5 befindet. Das Vorspannelement 10 wirkt sich auf die Verschlusskraft der Federkomponente 11 aus, indem es die Federkomponente 11 stärker oder schwächer staucht. Im hier dargestellten Zustand ist die Federkomponente 11 infolge der höheren Position des Vorspannelements 10 nur soweit gestaucht, sodass sich in der normalen Anwendung die Passage für das Ablassen des Überdrucks öffnet (siehe Fig. 1).

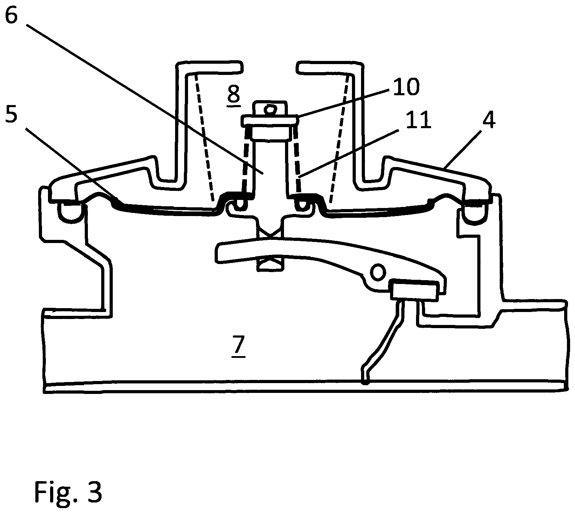

Die Fig. 3 zeigt den Fall, dass sich das Vorspannelement 10 axial entlang dem Steuerelement 6 tiefer in Richtung der Membran 5 befindet, wodurch die Federkomponente 11 stärker gestaucht wird und sich eine höhere Verschlusskraft ergibt. Der Druck in der Steuerkammer 7 kann somit deutlich mehr erhöht werden.

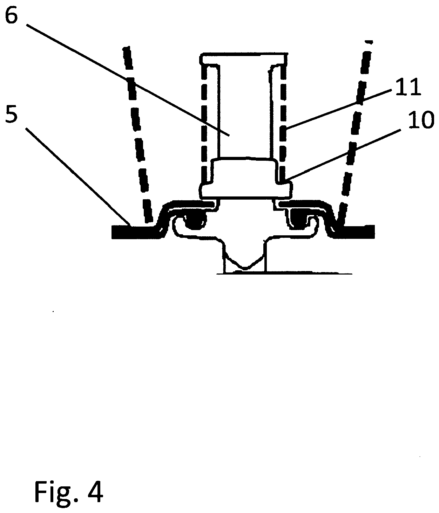

In der Fig. 4 ist ein Ausschnitt eines Gasreglers ähnlich der Variante der Fig. 2 und Fig. 3 dargestellt. Das Vorspannelement 10 ist dabei unten in Nähe der Membran 5 angebracht und nicht - wie bei der Variante der Fig. 2 und Fig. 3 - in Richtung des von der Membran 5 abgewandten Endes des Steuerelements 6.

Das Vorspannelement 10 der Ausgestaltungen der Fig. 2 und Fig. 3 ist um die Längsachse des Steuerelements 6 drehbar. Im inaktiven Zustand (Fig. 2) ruht eine Erhebung (beispielsweise gegeben durch einen Stift, der durch das obere Ende hindurchgeführt ist) des Steuerelements 6 in einer Aussparung des tellerartigen Vorspannelements 10. Durch die Drehung des Vorspannelements 10 liegt die Erhebung nicht mehr in der Aussparung, sodass das Vorspannelement 10 eine tiefere axiale Lage in Richtung der Membran 5 einnimmt (Fig. 3).

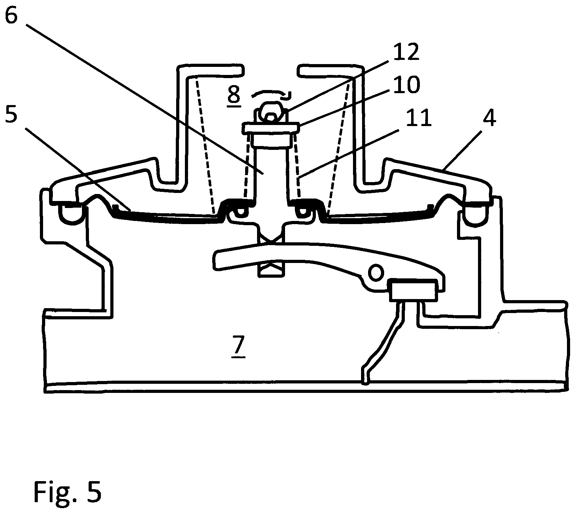

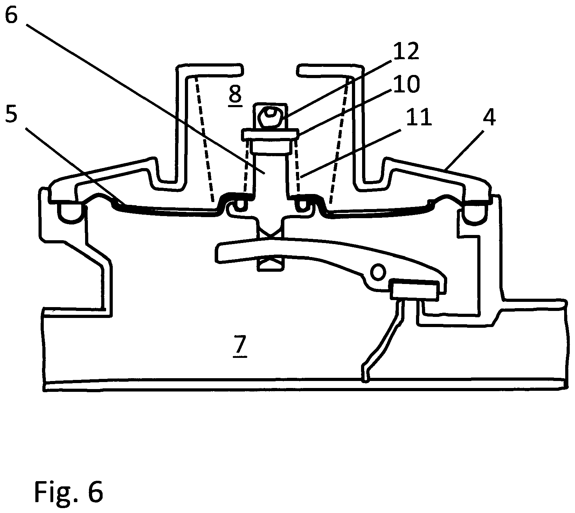

In der Variante der Fig. 5 und Fig. 6 ist eine Exzenterkomponente 12 vorgesehen, die das Vorspannelement 10 axial entlang der Längsachse des Steuerelements 6 bewegt. In der Fig. 5 ist der inaktive Zustand dargestellt. Das Vorspannelement 10 befindet sich an einem oberen axialen Endpunkt. Die Exzenterkomponente 12 ist hier ebenfalls mit dem Steuerelement 6 verbunden und befindet sich wiederum oberhalb des Vorspannelements 10. Wird die Exzenterkomponente 12 - wie hier durch den Pfeil angedeutet - gedreht, so wird das Vorspannelement 10 axial in Richtung der Membran 5 bewegt, wodurch sich die Verschlusskraft der Federkomponente 11 erhöht, da sie stärker komprimiert wird. Dadurch muss eine höhere Kraft aufgewendet werden, um die Passage zwischen Membran 5 und Steuerelement 6 zu öffnen.

### Bezugszeichenliste

- **1**: Gasdruckregler
- **2**: Einlass
- **3**: Auslass
- **4**: Gehäuse
- **5**: Membran
- **6**: Steuerelement
- **7**: Steuerkammer
- **8**: Ablasskammer
- **9**: Passage
- **10**: Vorspannelement
- **11**: Federkomponente
- **12**: Exzenterkomponente
- **20**: Hebel
- **21**: Dichtelement

## Patentansprüche

1. Gasdruckregler (1),
mit einem Einlass (2), einem Auslass (3), einem Gehäuse (4), einer Membran (5), einem Steuerelement (6), einer Steuerkammer (7), einer Ablasskammer (8),
einem verstellbaren Vorspannelement (10) und einer Federkomponente (11),
wobei der Einlass (2) und der Auslass (3) jeweils auf die Steuerkammer (7) münden, wobei die Membran (5) die Steuerkammer (7) teilweise begrenzt,
wobei die Membran (5) und das Steuerelement (6) derartig ausgestaltet und in dem Gehäuse (4) derartig angeordnet sind, sodass die Membran (5) und das Steuerelement (6) relativ zueinander beweglich sind,
wobei bei einer relativen Ablass-Anordnung von Membran (5) und Steuerelement (6) eine Passage (9) zwischen der Steuerkammer (7) und der Ablasskammer (8) geöffnet ist,
wobei das verstellbare Vorspannelement (10) eine relative Bewegung zwischen der Membran (5) und dem Steuerelement (6) behindert,
wobei die relative Bewegung zwischen Membran (5) und Steuerelement (6) gegen eine Federkraft der Federkomponente (11) erfolgt,
wobei das Vorspannelement (10) auf die Federkraft einwirkt,
wobei das Vorspannelement (10) relativ zum Steuerelement (6) bewegbar ausgestaltet und angeordnet ist, und
wobei eine Verschlusskraft der Federkomponente (11) abhängig von einer Position des Vorspannelements (10) relativ zum Steuerelement (6) ist,
**dadurch gekennzeichnet,**
**dass** das verstellbare Vorspannelement (10) eine von zwei festen Positionen einnehmen kann und zwischen den zwei festen Positionen bewegbar ist,
**dass** das Vorspannelement (10) verhindert, dass die Ablass-Anordnung erreicht wird, und
**dass** eine Exzenterkomponente (12) vorhanden ist, welche eine axiale Bewegung des Vorspannelements (10) entlang des Steuerelements (6) bewirkt, oder in einem inaktiven Zustand eine Erhebung des Steuerelements (6) in einer Aussparung des tellerartigen Vorspannelements (10) ruht und durch eine Drehung des Vorspannelements (10) um eine Längsachse des Steuerelements (6) die Erhebung außerhalb der Aussparung liegt, sodass das Vorspannelement (10) eine tiefere axiale Lage in Richtung der Membran (5) einnimmt.

2. Gasdruckregler (1) nach Anspruch 1,
wobei das Steuerelement (6) durch die Membran (5) hindurchragt, und
wobei sich die Passage (9) zwischen dem Steuerelement (6) und der Membran (5) öffnet.

3. Gasdruckregler (1) nach Anspruch 1 oder 2,
wobei ein Hebel (20) und ein Dichtelement (21) beweglich in dem Gehäuse (4) angeordnet sind,
wobei sich das Dichtelement (21) zwischen dem Einlass (2) und der Steuerkammer (7) befindet, und
wobei der Hebel (20) mit dem Steuerelement (6) mechanisch kontaktiert ist.

## Claims

1. A gas-pressure regulator (1),
having an inlet (2), an outlet (3), a housing (4), a diaphragm (5), a control element (6), a control chamber (7), a discharge chamber (8), an adjustable biasing element (10) and a spring component (11),
wherein the inlet (2) and the outlet (3) each open onto the control chamber (7),
wherein the diaphragm (5) partially delimits the control chamber (7),
wherein the diaphragm (5) and the control element (6) are configured and arranged within the housing (4) such that the diaphragm (5) and the control element (6) are movable relative to each other,
wherein a passage (9) between the control chamber (7) and the discharge chamber (8) is open in a relative discharge arrangement of the diaphragm (5) and the control element (6),
wherein the adjustable biasing element (10) impedes a relative movement between the diaphragm (5) and the control element (6),
wherein the relative movement between the diaphragm (5) and the control element (6) takes place against a spring force of the spring component (11),
wherein the biasing element (10) acts on the spring force,
wherein the biasing element (10) is configured and arranged so as to be movable relative to the control element (6), and
wherein a closing force of the spring component (11) depends on a position of the biasing element (10) relative to the control element (6),
**characterized in that**
the adjustable biasing element (10) can assume either of two fixed positions and is movable between the two fixed positions,
**in that** the biasing element (10) prevents the discharge arrangement from being reached, and
**in that** an eccentric component (12) is provided which causes an axial movement of the biasing element (10) along the control element (6), or, in an inactive state, a protrusion of the control element (6) rests in a recess of the plate-like biasing element (10) and, by a rotation of the biasing element (10) about a longitudinal axis of the control element (6), the protrusion is located outside the recess so that the biasing element (10) assumes a deeper axial position in the direction of the diaphragm (5).

2. The gas-pressure regulator (1) according to claim 1,
wherein the control element (6) projects through the diaphragm (5), and
wherein the passage (9) opens between the control element (6) and the diaphragm (5).

3. The gas-pressure regulator (1) according to claim 1 or 2,
wherein a lever (20) and a sealing element (21) are movably arranged within the housing (4),
wherein the sealing element (21) is located between the inlet (2) and the control chamber (7), and
wherein the lever (20) is in mechanical contact with the control element (6).

## Revendications

1. Régulateur de pression de gaz (1),
comprenant une entrée (2), une sortie (3), un boîtier (4), un diaphragme (5), un élément de commande (6), une chambre de commande (7), une chambre d'évacuation (8), un élément de précontrainte réglable (10) et un composant à ressort (11),
l'entrée (2) et la sortie (3) débouchant chacune sur la chambre de commande (7),
le diaphragme (5) délimitant en partie la chambre de commande (7),
le diaphragme (5) et l'élément de commande (6) étant réalisés et agencés dans le boîtier (4) de sorte que le diaphragme (5) et l'élément de commande (6) sont mobiles l'un par rapport à l'autre,
un passage (9) étant ouvert entre la chambre de commande (7) et la chambre d'évacuation (8) dans un agencement d'évacuation relatif du diaphragme (5) et de l'élément de commande (6),
l'élément de précontrainte réglable (10) empêchant un mouvement relatif entre le diaphragme (5) et l'élément de commande (6),
le mouvement relatif entre le diaphragme (5) et l'élément de commande (6) étant réalisé à l'encontre d'une force de ressort du composant à ressort (11),
l'élément de précontrainte (10) agissant sur la force de ressort,
l'élément de précontrainte (10) étant réalisé et agencé de manière à être mobile par rapport à l'élément de commande (6), et
une force de fermeture du composant à ressort (11) étant fonction d'une position de l'élément de précontrainte (10) par rapport à l'élément de commande (6),
**caractérisé en ce que**
l'élément de précontrainte réglable (10) est apte à prendre l'une de deux positions fixes et est mobile entre les deux positions fixes,
**en ce que** l'élément de précontrainte (10) empêche que l'agencement d'évacuation ne soit atteint, et
**en ce qu'**un composant excentrique (12) est présent, lequel provoque un mouvement axial de l'élément de précontrainte (10) le long de l'élément de commande (6), ou **en ce que** dans un état inactif, une bosse de l'élément de commande (6) repose dans un évidement de l'élément de précontrainte (10) en forme de disque, et la bosse se trouve à l'extérieur de l'évidement par une rotation de l'élément de précontrainte (10) autour d'un axe longitudinal de l'élément de commande (6), de sorte que l'élément de précontrainte (10) prend une position axiale plus basse dans le sens du diaphragme (5).

2. Régulateur de pression de gaz (1) selon la revendication 1,
l'élément de commande (6) faisant saillie à travers le diaphragme (5), et
le passage (9) entre l'élément de commande (6) et le diaphragme (5) s'ouvrant.

3. Régulateur de pression de gaz (1) selon la revendication 1 ou 2,
un levier (20) et un élément d'étanchement (21) étant agencés mobiles dans le boîtier (4),
l'élément d'étanchement (21) se trouvant entre l'entrée (2) et la chambre de commande (7), et
le levier (20) étant mécaniquement en contact avec l'élément de commande (6).
